# EUROPÄISCHE PATENTANMELDUNG

(11) **EP 2 897 258 A1**
(43) Veröffentlichungstag der Anmeldung: **22.07.2015**
(21) Anmeldenummer: 14151574.2
(22) Anmeldetag: 17.01.2014
(51) Int. Cl.: H02K 5/124, F16C 35/063

(54) **Einstellbare Fixierung einer Hülse auf der Welle einer dynamoelektrischen Maschine**

(71) Anmelder: Siemens Aktiengesellschaft, 80333 München (DE)
(72) Erfinder: Then, Thomas, 97616 Bad Neustadt (DE)

(57) **Zusammenfassung**

Die Erfindung betrifft eine rotatorische dynamoelektrische Maschine (1) mit einem Stator (4), der ein Wicklungssystem (16) aufweist, einem Rotor (5), der durch einen Luftspalt (6) vom Stator (4) beabstandet ist, und der über den Luftspalt (6) mit dem Wicklungssystem (16) des Stators (4) in elektromagnetischer Wechselwirkung steht und somit eine Drehung einer Welle (3) um eine Achse (17) ermöglicht, wobei die Welle (3) zumindest durch ein Lager (12) gehalten ist, wobei der Innenraum der dynamoelektrischen Maschine (1) mit Stator (4) und Rotor (5) an der Übergangsstelle zwischen den rotierenden Teilen und nicht rotierenden Teilen mittels eines Wellendichtrings (14) abgedichtet ist, wobei sich der Wellendichtring (14) radial auf einer Hülse (8) abstützt, die mittels eines Gewindes axial auf der Welle (3) axial unmittelbar am Innenring des Lagers (12) positionierbar ist.

## Beschreibung

Die Erfindung betrifft eine rotatorische dynamoelektrische Maschine mit einem Stator, der ein Wicklungssystem aufweist, und einem Rotor, der durch einen Luftspalt vom Stator beabstandet ist und der über den Luftspalt mit dem Wicklungssystem des Stators in elektromagnetischer Wirkung steht und somit eine Drehung um eine Welle bewirkt, wobei die dynamoelektrische Maschine an der Übergangsstelle zwischen den rotierenden Teilen und nicht rotierenden Teilen mittels eines Dichtrings abgedichtet ist.

Rotierende Maschinen, z.B. Servomotoren, müssen an der Übergangsstelle zwischen rotierenden und nicht rotierenden Teilen gegen eindringende Medien, z.B. Kühlflüssigkeiten von Werkzeugmaschinen, abgedichtet werden.

Des Weiteren führt eine axiale Verschiebung der Antriebswelle unter dem Festlager der dynamoelektrischen Maschine von bereits wenigen hundertstellen Millimetern bei bestimmten Anwendungsfälle, z.B. bei Ausstattung mit einer Haltebremse, bereits zu Ausfällen dieser Maschine.

Zur Abdichtung des Spaltes zwischen rotierenden und nicht rotierenden Teilen der Maschine, werden bisher Wellendichtringe eingesetzt. Nachteilig dabei ist, dass um eine Verschiebung der Welle durch eine externe Kraft zu verhindern, es bisher kaum zufriedenstellende Lösungen gab. Vielmehr wirkt die Reibkraft der aufgepressten Hülse wie sie sich gegen das Festlager abstützt, einer externen Kraft entgegen. Diese Reibkraft ist jedoch so gering, dass bereits geringe externe Kräfte diese Reibkraft überwinden können.

Andere grundsätzliche Lösungsmöglichkeiten zur axialen Abstützung bilden auch Sicherungsringe, wobei Sicherungsringe zur Montage bereits Spiel benötigen, so dass auch hier eine axiale Verschiebung der Welle in Größenordnung dieses Spiels möglich ist. Weitere Nachteile dieser Lösung bestehen darin, dass eine vergleichsweise hohe Schwächung der Welle durch einen notwendigen Einstich eintritt und der zusätzlich benötigte Einbauraum des Sicherungsrings.

Ausgehend davon, liegt der Erfindung die Aufgabe zugrunde, eine Hülse für einen Wellendichtring auf einer Welle vorzusehen und dabei oben genannte Nachteile zu vermeiden.

Die Lösung der gestellten Aufgabe gelingt durch eine rotatorische dynamoelektrische Maschine mit einem Stator, der ein Wicklungssystem aufweist, einem Rotor, der durch einen Luftspalt vom Stator beabstandet ist, und der über den Luftspalt mit dem Wicklungssystem des Stators in elektromagnetischer Wechselwirkung steht und somit eine Drehung einer Welle um eine Achse ermöglicht, wobei die Welle zumindest durch ein Lager gehalten ist, wobei der Innenraum der dynamoelektrischen Maschine mit Stator und Rotor an der Übergangsstelle zwischen den rotierenden Teilen und nicht rotierenden Teilen mittels eines Wellendichtrings abgedichtet ist, wobei sich der Wellendichtring radial auf einer Hülse abstützt, die mittels eines Gewindes axial auf der Welle axial unmittelbar am Innenring des Lagers positionierbar ist.

Erfindungsgemäß werden nun externe auf die Welle einwirkende Kräfte, insbesondere axiale Kräfte mittels der erfindungsgemäßen Hülse und deren Positionierung auf der Welle direkt in das Festlager eingeleitet. Diese Hülse ist mit einem Innengewinde ausgestattet, das formschlüssig mit einem dementsprechenden korrespondierenden Außengewinde der Welle verbunden ist. Damit werden die Kräfte in das Festlager eingeleitet. Eine axiale Verschiebung der Welle gegen das Festlager ist somit nicht mehr möglich.

In vorteilhafter Weise ist eine zylinderförmige Außenfläche der Hülse derart gestaltet, dass sie auf der dem Festlager abgewandten Seite dichtend gegen einen radial dichtenden Wellendichtring wirkt.

Auf der dem Festlager zugewandten Seite kann diese mit einer oder mehreren radialen Bohrungen versehen sein, welche die Vorspannung der Hülse auf der Welle mittels eines Werkzeugs erleichtern. Die Vorspannung dieser Hülse erfolgt vorteilhafterweise durch einen Hakenschlüssel.

Eine alternative Verwendung dieser radialen Bohrungen besteht darin, mittels dort eingesetzter Madenschrauben eine Fixierung der Hülse an der Welle zu bewirken.

Diese Ausführungen führen zu einer einstellbaren Fixierung der Hülse auf der Welle.

Um eine genaue axiale Positionierung der Hülse auf der Welle zu erhalten, ist die Hülse, als auch das Gewinde der Welle mit einem korrespondierenden Feingewinde versehen.

Die Erfindung sowie vorteilhafte Ausgestaltungen der Erfindung werden anhand prinzipieller Darstellungen erläutert. Darin zeigt:
- FIG 1: einen prinzipiellen Längsschnitt einer Antriebsanordnung,
- FIG 2: eine erfindungsgemäße Hülse,
- FIG 3: den Einbau einer derartigen Hülse an einem Motor.

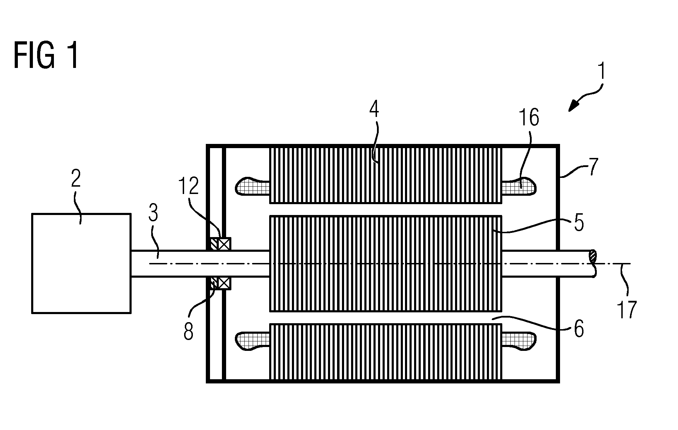

FIG 1 zeigt in einen prinzipiellen Längsschnitt eine rotatorische dynamoelektrische Maschine 1, die über eine Welle 3 eine Arbeitsmaschine 2 antreibt. Die rotatorische dynamoelektrische Maschine 1 weist einen Stator 4 auf, der in axial verlaufenden Nuten ein Wicklungssystem 16 aufweist, das an den Stirnseiten des Blechpakets des Stators 4 Wickelköpfe ausbildet. Die Welle 3 ist drehfest mit einem Rotor 5 verbunden, der Permanentmagnete aufweist und/oder auch als Käfigläufer einer Asynchronmaschine ausgebildet sein kann. Der Rotor 5 wechselwirkt elektromagnetisch über einen Luftspalt 6 mit dem Wicklungssystem 16 des Stators 4 und erzeugt so einen Drehmoment, das über die Welle 3 an die Arbeitsmaschine 2 übertragen wird. Die Welle 3 ist zumindest mittels eines Festlagers 12 in einem Gehäuse 7 gehalten und dreht sich um eine Achse 17.

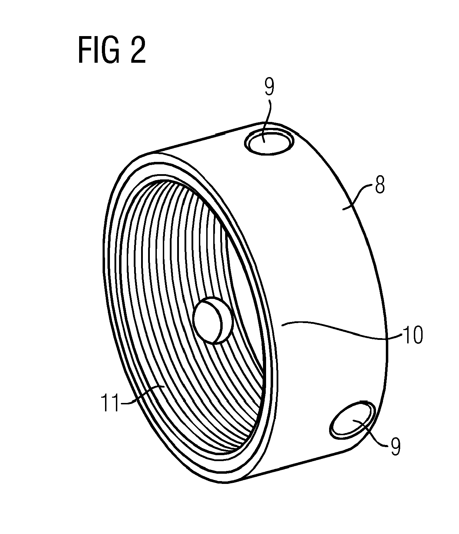

FIG 2 zeigt in perspektivischer Darstellung eine Hülse 8, die eine axiale Verschiebung der Welle 3 gegen das Festlager 12 verhindert. Damit werden externe auf die Welle 3 einwirkende Kräfte durch die Hülse 8, die vorteilhafter Weise in einem Innengewinde formschlüssig in ein entsprechendes Außengewinde 15 der Welle 3 eingreifen, in das Festlager 12 geleitet. Die Hülse 8 weist auf seiner Innenseite ein Innengewinde auf, das vorzugsweise als Feingewinde ausgebildet ist um so eine exakte axiale Positionierung der Hülse 8 auf der Welle 3 zu erhalten. Vorzugsweise auf der dem Rotor 5 zugewandten Seite der Hülse 8 sind Bohrungen 9 vorgesehen, welche die Vorspannung der Hülse 8 auf der Welle 3 mittels eines Werkzeugs, insbesondere eines dazu geeigneten Hakenschlüssels erleichtern.

In einer alternativen Ausführungsform dienen die Bohrungen 9 zur Fixierung der Hülse 8 auf der Welle 3, indem in diese Bohrungen 9 Madenschrauben einsetzbar sind.

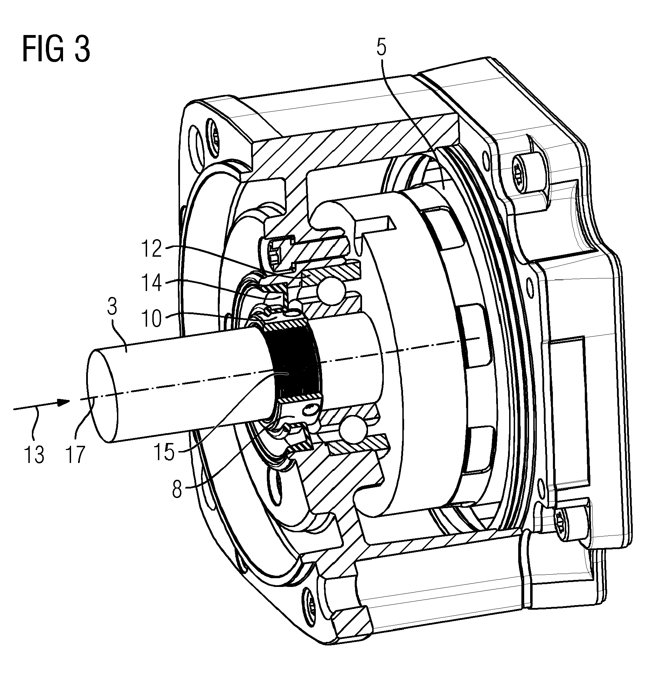

Die Bohrungen 9 sind an der Umfangsfläche der Hülse 8 gleichmäßig verteilt und befinden sich vorzugsweise gemäß FIG 3 in einem axialen Drittel oder axialen Hälfte der Hülse 8, die dem Rotor 5 zugewandt ist. Dies führt zu einer Lauffläche 10 auf der dem Rotor 5 abgewandten Abschnitt der Hülse 8, die mit einem Wellendichtring 14 zusammenwirkt.

FIG 3 zeigt in teilperspektivischer Darstellung den Einbau der Hülse 8 auf der Welle 3. Die Hülse 8 befindet sich axial zwischen der Arbeitsmaschine 2 und dem Festlager 12 der rotatorischen dynamoelektrischen Maschine 1. Die Hülse ist direkt an dem Innenlagerring des Festlagers 12 positioniert und dagegen verspannt. Durch die korrespondierenden Gewinde von Hülse 8 und Welle 3 ist eine genaue axiale Positionierung der Hülse 8 auf der Welle 3 möglich. Damit ist eine axiale Verschiebung der Welle 3, die sich auf dem Innenring des Festlagers 12 abstützt nicht mehr möglich. Eine Fixierung der Hülse 8 auf der Welle 3 wird durch vorgegebenes Anzugsmoment mittels eines Hakenschlüssels und/oder durch Madenschrauben in den Bohrungen 9 und/oder durch einen dichtenden Kleber zwischen den Gewindegängen von Hülse 8 und Welle 3 gewährleistet.

Der Kleber verhindert zusätzlich ein selbstständiges Lösen der Hülse 8 z.B. aufgrund von Vibrationen oder einem Reibmoment des Wellendichtrings 14 und dichtet den Gewindespalt ab. Um Flüssigkeiten aus dem Innenraum der elektrischen Maschine fern zu halten, ist radial außerhalb der Hülse 8 der Wellendichtring 14 vorgesehen, der mit der Lauffläche 10 bzw. Dichtfläche der Hülse 8 dichtend zusammenwirkt.

Durch ein Feingewinde kann sich die axiale Positionierung der Hülse 8 auf der Welle 3 sehr exakt einstellen lassen, und es werden auch kleine Durchmesserdifferenzen von axialen Teilabschnitten der Welle 3 für die Einbringung eines Gewindes nutzbar.

Die vorliegende Erfindung ist nicht auf rotatorische dynamoelektrische Maschinen reduziert, sie kann vielmehr auf alle rotierenden Maschinen oder Anlagenteile übertragen werden.

## Patentansprüche

1. Rotatorische dynamoelektrische Maschine (1) mit einem Stator (4), der ein Wicklungssystem (16) aufweist, einem Rotor (5), der durch einen Luftspalt (6) vom Stator (4) beabstandet ist, und der über den Luftspalt (6) mit dem Wicklungssystem (16) des Stators (4) in elektromagnetischer Wechselwirkung steht und somit eine Drehung einer Welle (3) um eine Achse (17) ermöglicht, wobei die Welle (3) zumindest durch ein Lager (12) gehalten ist, wobei der Innenraum der dynamoelektrischen Maschine (1) mit Stator (4) und Rotor (5) an der Übergangsstelle zwischen den rotierenden Teilen und nicht rotierenden Teilen mittels eines Wellendichtrings (14) abgedichtet ist, wobei sich der Wellendichtring (14) radial auf einer Hülse (8) abstützt, die mittels eines Gewindes axial auf der Welle (3) axial unmittelbar am Innenring des Lagers (12) positionierbar ist.

2. Rotatorische dynamoelektrische Maschine (1) nach Anspruch 1, **dadurch gekennzeichnet, dass** die Hülse (8) mit einem Gewinde (11), insbesondere einem Feingewinde mit M25x0,75 versehen ist.

3. Rotatorische dynamoelektrische Maschine (1) nach Anspruch 1 oder 2, **dadurch gekennzeichnet, dass** die Hülse (8) in Umfangsrichtung verteilt eine oder mehrere radiale Bohrungen (9) aufweist.

4. Rotatorische dynamoelektrische Maschine (1) nach Anspruch 3, **dadurch gekennzeichnet, dass** die radiale Bohrungen (9) der Hülse (8) vorzugsweise in einem axialen Abschnitt der Hülse (8) angeordnet sind.

5. Rotatorische dynamoelektrische Maschine (1) nach Anspruch 3 oder 4, **dadurch gekennzeichnet,**
**dass** die Hülse 8 auf der Welle 3 durch vorgegebenes Anzugsmoment mittels eines Hakenschlüssels und/oder durch Madenschrauben in den Bohrungen 9 und/oder durch einen dichtenden Kleber zwischen den Gewindegängen von Hülse 8 und Welle 3 gewährleistet ist.

6. Rotatorische dynamoelektrische Maschine (1) nach einem der vorhergehenden Ansprüche, **dadurch gekennzeichnet, dass** die Hülse (8) eine axiale Fixierung des Innenrings des Lagers (12) bewirkt.

7. Rotatorische dynamoelektrische Maschine (1) nach einem der vorhergehenden Ansprüche, **dadurch gekennzeichnet, dass** durch die Hülse (8) ein radialer Wellenversatz ausgleichbar ist.
